(19) Europäisches Patentamt

European Patent Office

Office européen des brevets

(11) Numéro de publication : **0 423 031 B1**

(12) **FASCICULE DE BREVET EUROPEEN**

(45) Date de publication du fascicule du brevet :
**15.12.93 Bulletin 93/50**

(51) Int. Cl.⁵ : **G01L 23/22**

(21) Numéro de dépôt : **90402831.3**

(22) Date de dépôt : **10.10.90**

(54) **Procédé et dispositif de détection de cliquetis.**

(30) Priorité : **11.10.89 FR 8913284**

(43) Date de publication de la demande :
**17.04.91 Bulletin 91/16**

(45) Mention de la délivrance du brevet :
**15.12.93 Bulletin 93/50**

(84) Etats contractants désignés :
**DE GB IT**

(56) Documents cités :
**EP-A- 0 361 057**
**EP-A- 0 376 024**
**WO-A-89/11088**
**DE-A- 3 133 703**

(56) Documents cités :
**DE-A- 3 523 017**
**DE-A- 3 813 932**
**GB-A- 2 215 841**
**US-A- 4 345 558**
**US-A- 4 899 710**

(73) Titulaire : **MARELLI AUTRONICA**
**19 Rue Lavoisier**
**F-92000 Nanterre (FR)**

(72) Inventeur : **Brunetti, Giovanni**
**54, 56 Rue Eugène Labiche**
**F-92500 Rueil Malmaison (FR)**

(74) Mandataire : **Fort, Jacques et al**
**CABINET PLASSERAUD 84, rue d'Amsterdam**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé et un dispositif de détection du cliquetis dans un moteur à allumage par étincelles à quatre temps, c'est-à-dire mettant en oeuvre le cycle de Beau de Rochas.

Le cliquetis est dû à un auto-allumage prématuré du mélange de combustibles lors de la phase de compression, lorsque le piston approche du point mort haut. Le cliquetis est nuisible à la fois au rendement du moteur et à sa longévité. Il est souhaitable de le détecter avant même qu'il devienne audible et, en réponse à ce signal de détection, de modifier automatiquement un des paramètres de fonctionnement du moteur, tel que l'avance à l'allumage, la richesse du mélange air/combustible fourni au moteur, ou le rapport de la boîte de vitesse dans le sens qui fait disparaître le cliquetis.

Le phénomène de cliquetis se manifeste par des vibrations qui présentent des pics de puissance à des fréquences de résonance de la chambre de combustion où il se produit. Ces fréquences augmentent avec l'alésage de la chambre et la température des gaz, ce qui fait que la fréquence tend à diminuer au cours de la phase de détente par suite du refroidissement des gaz. Les fréquences de résonance varient également en fonction croissante de la vitesse du moteur et, dans une moindre mesure, de sa charge qui influe sur la température des gaz.

Les vibrations dues au cliquetis se superposent au bruit de fond du moteur, dont la densité de puissance décroît au-delà de 6 kHz environ et qui dépend peu de la présence ou de l'absence du cliquetis.

En règle générale, les vibrations dues au cliquetis présentent un premier pic à une fréquence f1 qui, sur les moteurs courants, est généralement comprise entre 7 et 8 kHz lorsque le moteur fonctionne à bas régime et augmente d'environ 2 kHz lorsque le moteur monte en régime. Un second pic de puissance, à une fréquence f2 qui est généralement de 11 à 13 kHz à bas régime, n'apparaît que lorsque le phénomène de cliquetis est intense ; lorsqu'il existe, il est plus facilement décelable que le premier pic du fait d'un meilleur rapport signal bruit. Enfin, un troisième pic est souvent observé, avant l'apparition des pics de fréquences f1 et f2, lorsque le piston est au voisinage du point mort haut, à une fréquence qui est généralement de 16 à 17 kHz à bas régime et augmente elle aussi, d'environ 2 kHz au maximum, au fur et à mesure que la vitesse et la charge du moteur augmentent.

Par US-A-4,467,634, on connait déjà un procédé de détection du cliquetis d'un moteur à allumage par étincelles, suivant lequel on transforme les vibrations détectées en un emplacement du moteur proche des chambres de combustion en un signal électrique, qui est amplifié, on isole dans le signal électrique l'énergie dans au moins une bande de fréquence de cliquetis et dans au moins une bande de fréquence de bruit de fond, plus basse que la plus haute bande de fréquence de cliquetis, au cours d'au moins une fenêtre temporelle synchronisée avec le cycle de fonctionnement du moteur, et on détecte la présence de cliquetis par comparaison effectuée en utilisant au moins le niveau de puissance dans la bande de bruit de fond et le niveau de puissance dans la ou les bandes de cliquetis. Le dispositif décrit dans ce document pour mettre en oeuvre ce procédé comprend notamment un détecteur de vibrations disposé sur le moteur, en un emplacement proche des chambres de combustion, et délivrant un signal électrique à au moins deux voies en parallèle, comportant des moyens d'amplification et de redressement du signal, et affectées, pendant au moins une fenêtre temporelle synchronisée avec le cycle de fonctionnement du moteur, à la détection du bruit de fond pour au moins une voie, et à la détection du cliquetis pour au moins une autre voie, chaque voie comprenant un filtre passe-bande ayant une bande passante différente de celle des autres filtres.

Mais, dans ce document, les moyens d'amplification sont des amplificateurs logarithmiques qui font suite, dans chaque voie, au filtre passe-bande correspondant, et les moyens de redressement de chaque voie sont suivis d'un détecteur d'enveloppe, constitué d'un filtre passe-bas, et le signal d'enveloppe de chaque voie est comparé, dans un comparateur propre à la voie considérée, à un seuil commun aux voies, élaboré à partir du signal dans une voie de cliquetis, avec superposition d'une tension de décalage pour que le seuil soit éventuellement modifié, par exemple en fonction de la vitesse du moteur, ou à un seuil propre à chaque voie, et élaboré dans des conditions sensiblement analogues. Les signaux de sortie des comparateurs à seuil sont envoyés à une porte logique, recevant également un signal pendant la fenêtre de mesure, de sorte que la porte logique délivre un signal indiquant la présence de cliquetis lorsque, d'une part, la voie de détection sur la fréquence de cliquetis fournit un signal alors que la voie affectée au bruit de fond n'en fournit pas, pendant la fenêtre de mesure, ce signal indicateur de présence de cliquetis devant être maintenu pendant un certain temps sur une entrée d'une seconde porte logique pour être validé.

Le document US-A-4,345,558 décrit un procédé et un dispositif de détection de cliquetis, qui ne complètent l'enseignement du document précédent qu'en ce qu'il prévoit une commutation des filtres, pour passer d'une voie de détection à une autre, en fonction de certains paramètres de fonctionnement du moteur, tels que la vitesse de rotation.

Par ailleurs, on connait par EP-A-361 057, bénéficiant d'une priorité antérieure à celle de la présente demande, mais publiée postérieurement, un dispositif et un procédé de détection du cliquetis tels que le signal émis par un capteur de vibrations est transmis en parallèle à trois voies, dont une affectée au bruit de fond et deux au cliquetis, et comprenant chacune un filtre passe-bande, à bande passante différente de celle des autres filtres, et un redresseur. Les signaux des voies affectées au cliquetis sont comparés, et si le rapport du plus petit au plus grand des signaux est inférieur à une valeur donnée, seul le plus grand signal est intégré et comparé à un signal résultant de l'intégration du signal de bruit de fond non amplifié mais augmenté d'un seuil réglable. Par contre, si le rapport des signaux des voies de cliquetis est supérieur à la valeur donnée, la somme de ces signaux est intégrée puis comparée à un signal obtenu en intégrant le signal de la voie de bruit de fond après amplification, puis addition du seuil réglable.

Ces procédés et les dispositifs qui les mettent en oeuvre ont généralement une sélectivité insuffisante.

L'invention vise à fournir un procédé et un dispositif de détection répondant mieux que ceux antérieurement connus aux exigences de la pratique, notamment en ce qu'ils présentent à la fois une sensibilité et une sélectivité améliorées.

Dans ce but, l'invention propose un procédé de détection du type connu par US-A-4,467,634, tel que présenté en premier lieu ci-dessus, et qui se caractérise en ce que:

on assure l'amplification du signal électrique avec un coefficient réglable,

on commande le coefficient d'amplification du signal pour chacune des bandes de fréquence en fonction de la puissance du signal dans la seule bande de fréquence de bruit de fond,

on isole l'énergie du signal électrique dans au moins deux bandes de fréquence de cliquetis, dont une bande de fréquence haute et une bande de fréquence basse, et

on détecte la présence de cliquetis par comparaison du niveau de puissance dans la bande de bruit de fond à un niveau de puissance résultant d'une sélection entre les bandes de fréquence de cliquetis ou d'une combinaison entre ces bandes de fréquence de cliquetis.

L'invention vise également à fournir un dispositif de détection de cliquetis destiné à la mise en oeuvre du procédé ci-dessus défini.

A cet effet, dans un premier mode de réalisation, le dispositif est également du type connu par US-A-4,467,634, comme présenté ci-dessus en premier lieu, et se caractérise en ce que les moyens d'amplification sont un amplificateur à gain réglable, commun à toutes les voies, monté entre le détecteur et les filtres passe-bande, et alimentant une unique voie affectée à la détection du bruit de fond, comprenant également des moyens d'intégration et des moyens d'échantillonnage qui lui sont propres, et le signal de bruit de fond intégré étant appliqué à une entrée de commande de gain de l'amplificateur à gain réglable, lequel alimente également au moins deux voies affectées à la détection du cliquetis, comportant également des moyens d'intégration et des moyens d'échantillonnage qui leur sont propres, les sorties des moyens d'échantillonnage étant appliquées à l'entrée de moyens de multiplexage temporel, envoyant en succession leurs signaux de sortie échantillonnés à une unité de traitement numérique de données, qui commande la ou les fenêtres temporelles, de sorte qu'elle(s) corresponde(nt) chacune à une fraction de la phase de détente d'une des chambres de combustion du moteur, et les moyens d'intégration, d'échantillonnage et de multiplexage, et élabore un signal indicateur de cliquetis en fonction des résultats de comparaisons faites entre les signaux échantillonnés qu'elle reçoit.

Dans une première variante de ce premier mode de réalisation, chacune des voies affectées à la détection du cliquetis comporte ses propres moyens de redressement et d'intégration, intégrant pendant une fenêtre temporelle correspondante, les moyens d'échantillonnage correspondants étant communs aux différentes voies affectées à la détection du cliquetis et recevant, sur leur entrée, la sortie de moyens de sélection sélectionnant celui des signaux qui est le plus élevé parmi ceux provenant des moyens d'intégration des voies de détection du cliquetis, après comparaison de ces signaux par des moyens de comparaison commandant les moyens de sélection.

Dans une seconde variante du premier mode de réalisation, les voies affectées à la détection du cliquetis comportent chacune un commutateur de sélection de fenêtre temporelle, et sont reliées à l'entrée de moyens de sommation de signal, communs à ces voies, et dont la sortie est reliée à l'entrée des moyens de redressement, d'intégration et d'échantillonnage également communs à ces voies, la durée d'intégration desdits moyens d'intégration recouvrant les fenêtres temporelles commandées par l'unité pour la fermeture des commutateurs.

Bien entendu, dans les différents dispositifs selon l'invention, les filtres passe-bande des voies affectées au cliquetis ont chacun une bande passante correspondant à l'un des pics de puissance du cliquetis.

Dans la seconde variante précitée, chaque commutateur est commandé de sorte que la voie correspondante alimente les moyens de sommation uniquement pendant la fraction correspondante déterminée de la phase de détente, correspondant à une présence significative d'un pic de puissance dans la bande du filtre correspondant. Ces fractions de la phase de détente peuvent être jointives ou présenter un recouvrement.

Dans un autre mode de réalisation de l'invention, le dispositif comprend encore un détecteur de vibrations, disposé en un emplacement du moteur proche des chambres de combustion, et délivrant un signal électrique, et se caractérise en ce que ce signal est transmis à un amplificateur à gain réglable, alimentant des moyens commutateurs de sélection de fenêtres temporelles, dont la sortie est reliée à un convertisseur analogique-numérique, lui-même relié par sa sortie à un organe de transformation du signal électrique à variation temporelle en des données de définition du signal dans le domaine fréquentiel, pour la tranche de signal comprise dans chaque fenêtre temporelle, et une unité de traitement numérique de données à laquelle ledit organe transmet lesdites données de définition du signal dans le domaine fréquentiel, et permettant de déterminer la densité spectrale de puissance dans la bande de fréquence de bruit de fond et dans les au moins deux bandes de fréquence de détection du cliquetis, d'effectuer une comparaison entre lesdites densités pour délivrer un signal de présence ou d'absence de cliquetis, de commander le gain de l'amplificateur en fonction de la densité de puissance dans la bande de bruit de fond, et de commander les moyens commutateurs de sélection de fenêtres temporelles, de sorte que chaque fenêtre temporelle soit synchronisée avec le cycle de fonctionnement du moteur.

De nombreux autres modes de réalisation sont possibles, omettant certains des constituants mentionnés ci-dessus ou constitués par une combinaison différente de ces constituants, reprenant des éléments à plusieurs des solutions envisagées plus haut.

En général, on donnera aux filtres destinés à détecter les pics de puissance du cliquetis une largeur comprise entre 600 Hz et 1 kHz, suffisante pour tenir compte du déplacement du pic au cours de la course de détente et/ou on ajustera automatiquement ces filtres, par exemple en réponse à la vitesse du moteur, pour faire varier la fréquence centrale de 2 kHz environ.

On peut notamment utiliser des filtres à condensateurs commutables, permettant de modifier la fréquence centrale pas à pas, par exemple en huit pas de 250 Hz.

L'invention sera mieux comprise à la lecture de la description qui suit de modes particuliers de réalisation, donnés à titre d'exemples non limitatifs. La description se réfère aux dessins qui l'accompagnent, dans lesquels :

- la figure 1 est un schéma synoptique de principe montrant un premier mode de réalisation de l'invention, avec détection du cliquetis dans deux bandes de fréquence ;
- la figure 2 est un diagramme temporel montrant les fenêtres de mesure et la sélection du signal de mesure dans le dispositif de la figure 1 ;
- la figure 3, similaire à la figure 1, montre un mode de réalisation dans lequel la détection du cliquetis s'effectue dans trois bandes de fréquence ;
- la figure 4, similaire à la figure 2, est un diagramme temporel montrant les fenêtres de mesure dans les diverses branches du dispositif de la figure 3 ;
- la figure 5 est un diagramme montrant l'allure de l'enveloppe de la transformée de Fourier du signal fourni par un accéléromètre placé à proximité d'un cylindre, en présence et en l'absence de cliquetis ;
- la figure 6, similaire aux figures 1 et 3, montre une autre variante encore de réalisation de l'invention.

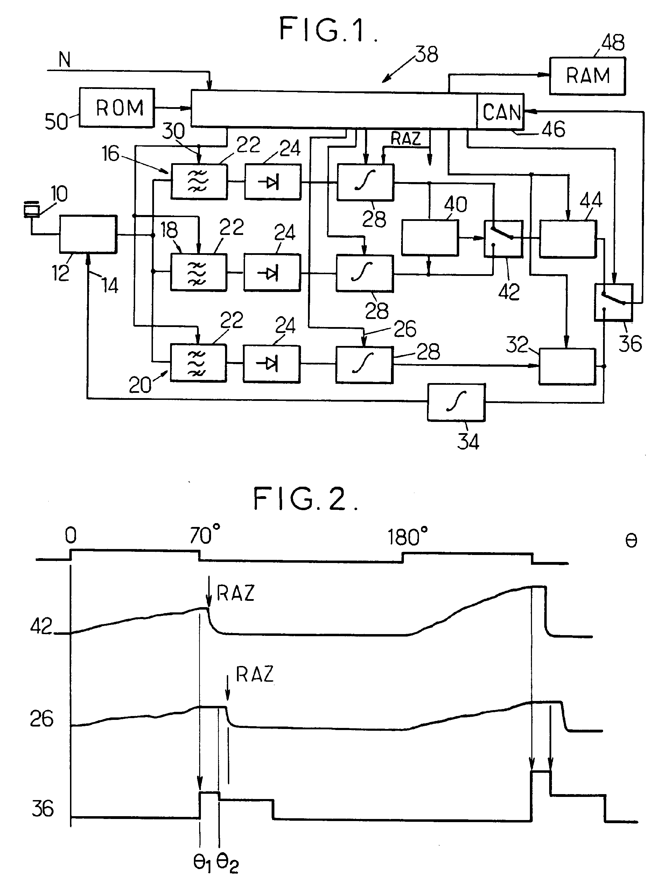

Le dispositif de détection de cliquetis dont la constitution de principe est montrée en figure 1 comporte un capteur, généralement constitué par un accéléromètre piézo-électrique 10 ayant une courbe de réponse sensiblement plate dans toute la plage de mesure utilisée, c'est-à-dire jusqu'à 14 kHz environ. L'accéléromètre 10 est placé généralement sur la culasse. Son signal de sortie est appliqué à l'entrée d'un amplificateur 12 à large bande, ayant une entrée 14 de commande de gain, dont le rôle sera indiqué plus loin.

Le signal de sortie de l'amplificateur 14 est appliqué à trois branches 16,18 et 20, dont l'une 20 est destinée à donner une évaluation du bruit de fond et à commander le gain de l'amplificateur. Les trois branches ont la même constitution générale. Elles comportent chacune un amplificateur passe-bande 22, un redresseur simple ou double alternance 24 et un intégrateur 28, qui effectue une intégration temporelle pendant la durée d'une fenêtre de mesure fixée par la présence d'un signal sur une entrée 26. La durée de ce signal correspond à une plage déterminée de rotation du vilebrequin du moteur et dépend donc de la vitesse du moteur.

La branche 16 est destinée à détecter les vibrations de cliquetis dans une bande centrée sur une fréquence basse f1. Pour cela, le filtre passe-bande 22 de cette branche à une fréquence centrale de 6,5 kHz en général à bas régime et est constitué pour permettre de l'augmenter par pas, par exemple de 250 Hz, sur une amplitude qui est par exemple de 2 kHz. Le filtre peut notamment être du type à condensateurs commutés par commande sur une entrée 30. Le filtre est suivi du redresseur à simple ou double alternance 24 et de l'intégrateur 28, muni d'une entrée de remise a zéro RAZ.

La seconde branche 18 a une constitution similaire à la première si ce n'est que le filtre 18 a une fréquence centrale f2 plus élevée, qui peut être modifiée, par pas de même amplitude que pour la branche 16, de 11 kHz à 13 kHz par exemple. La largeur de bande peut encore être de 600 à 1 000 Hz.

Les fréquences centrales f1 et f2 sont sélectionnées pour chaque type de moteur ; mais dans la pratique elles ne varient pas de plus de 10 % environ en plus ou en moins, suivant le moteur.

Plusieurs choix peuvent être effectués pour la branche 20. Une première solution consiste à détecter le bruit de fond dans l'intervalle compris entre les fréquences f1 et f2, par exemple avec un filtre ayant une fréquence centrale de 9 à 10 kHz a bas régime et une largeur de bande également de 600 à 1 000 Hz, décalable en fonction de la vitesse. Une autre solution consiste à adopter dans la branche 20 un filtre 22 dont la fréquence centrale est inférieure à f1, par exemple de 2,5 kHz, ce qui autorise une plus grande largeur de bande (3 kHz par exemple). Pour des raisons de cohérence entre les trois voies, il est souvent plus avantageux d'adopter des filtres ayant une largeur de bande du même ordre, la fréquence centrale du filtre de la branche 20 étant comprise entre les fréquences f1 et f2. Dans ce cas, une solution qui a l'avantage de la simplicité consiste à adopter les mêmes fenêtres temporelles d'intégration pour les trois branches, par exemple correspondant à un angle de 0 à 70° à partir du point mort haut, comme indiqué pour l'angle θ sur la figure 2 ; dans la pratique la limite de la fenêtre angulaire peut varier entre 60° et 75°.

La branche 20 comporte un échantillonneur-bloqueur 32 fournissant, sur sa sortie, un signal analogique de mesure du résultat de l'intégration. Ce signal d'une part commande le gain de l'amplificateur 12, à travers un intégrateur 34 à constante de temps élevée, (correspondant à plusieurs cycles de fonctionnement du moteur), d'autre part est appliqué, avec éventuellement adjonction d'une tension de décalage si la fenêtre d'intégration n'est pas la même que pour les deux autres branches, à l'une des entrées d'un multiplexeur 36. Le multiplexeur 36 fournit ainsi un signal de bruit de fond à une unité de traitement 38, pouvant être le calculateur central d'un véhicule automobile ou une carte de circuit imprimé portant les composants de commande d'alimentation en combustible et/ou d'allumage du moteur.

Les sorties des deux autres branches 16 et 18 sont comparées, pendant toute la durée de la fenêtre d'intégration, par un comparateur 40 qui commande un commutateur 42 pour orienter, vers un second échantillonneur-bloqueur 44, celle des sorties qui est au niveau le plus élevé. La sortie de l'échantillonneur-bloqueur 44 est appliquée sur la seconde entrée du multiplexeur 36.

L'unité de traitement 38 remplit diverses fonctions. Elle génère, à partir d'une horloge (non représentée) et d'un signal de phase fourni par un contact équipant le moteur, les fenêtres d'intégration. Elle règle la fréquence centrale des filtres passe-bande 22 à partir d'un signal de vitesse N provenant du moteur. Ce signal peut notamment provenir d'un rupteur placé sur l'arbre du moteur et fournissant également la référence de phase permettant de caler les fenêtres d'intégration. L'unité de calcul 38 élabore également des signaux de remise à zéro des intégrateurs et de commande du multiplexeur 36.

Sur la figure 2, où les lignes 42, 26 et 36 indiquent la variation des signaux à la sortie des composants portant le même numéro sur la figure 1, on voit que les sorties des échantillonneurs-bloqueurs 44 et 32 sont successivement envoyées à l'unité de calcul 38 à des instants correspondant à des angles θ1 et θ2 à partir du point mort haut. Ces niveaux de sortie sont numérisés par un convertisseur analogique-numérique 46 et stockés dans une mémoire vive 48.

Diverses stratégies de détermination de présence cliquetis peuvent être utilisées. En règle générale, il est préférable d'effectuer une détermination séparée sur chacun des cylindres du moteur, un cylindre pouvant présenter le phénomène de cliquetis avant les autres. Une stratégie qui donne de bons résultats consiste à comparer le rapport entre les signaux de sortie des échantillonneurs-bloqueurs 44 et 32 lors d'un cycle donné à une moyenne pondérée du même rapport sur les cycles précédents. L'unité de traitement fournit par exemple un signal indiquant l'apparition du cliquetis lorsque l'inégalité suivante est vérifiée :

$$R_n > K. C. R_m$$

où

$$R_m = R_{n-4}/2 + R_{n-8}/4 + R_{n-12}/8 + ...$$

dans le cas d'un moteur à quatre cylindres, n indiquant le numéro d'ordre d'un échantillonnage.

K est un coefficient fonction de la vitesse du moteur, stocké dans une mémoire morte 50. C est un coefficient qui peut prendre deux valeurs (ou davantage) en fonction de la dérivée $\Delta N/\Delta\theta$ de la vitesse du moteur par rapport à l'angle.

Le mode de réalisation qui vient d'être décrit a une sensibilité élevée et sensiblement constante car les vibrations sont toujours détectées dans la plage de fréquence donnant les meilleurs résultats et la commande du gain d'amplification maintient le signal de bruit à un niveau presque constant. Les risques de fausse détection sont atténués par l'utilisation d'une stratégie tenant compte de l'évolution du signal.

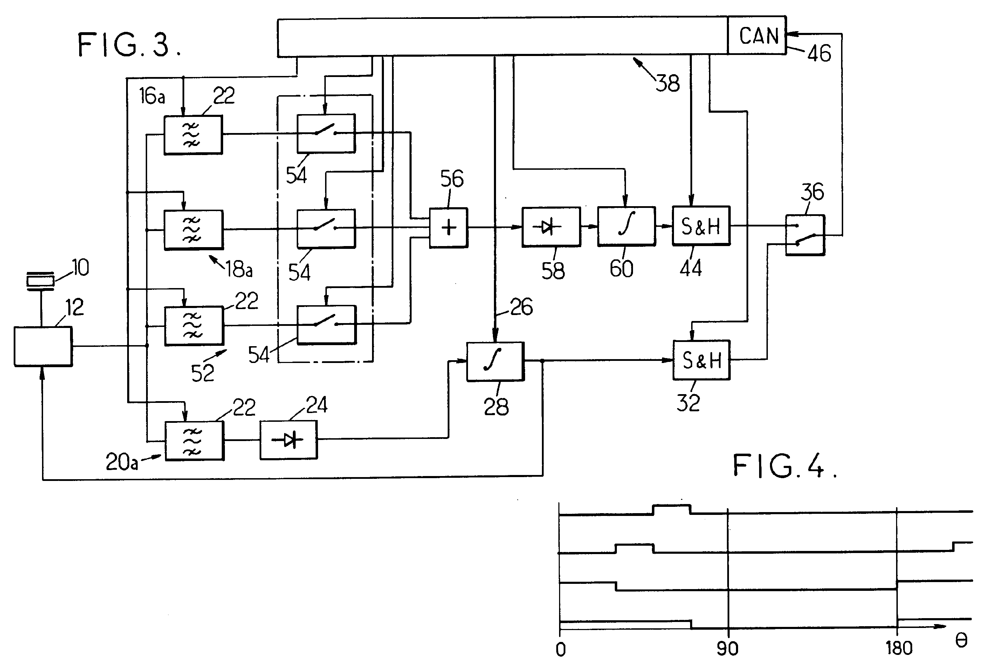

La variante de réalisation montrée en figure 3, où les éléments identiques à ceux montrés en figure 1 portent le même numéro de référence, se différencie du mode de réalisation précédent notamment en ce qu'elle comporte une troisième branche de détection d'un autre pic de vibrations dues au cliquetis. Cette troisième branche 52 comporte encore un filtre passe-bande 22, ayant une fréquence centrale de 16 kHz à bas régime et une largeur de bande de 600 à 1 000 Hz, décalable vers les fréquences élevées en réponse à une commande reçue de l'unité de traitement 38.

Dans la variante de la figure 3, il n'y a pas sélection entre plusieurs branches de détection du cliquetis, mais sommation des signaux provenant des filtres au cours de fenêtres angulaires successives, présentant éventuellement un recouvrement. Pour cela, chacune des branches 16a, 18a et 52 comporte un commutateur particulier 54 commandé par l'unité de traitement 38. Dans le cas de la figure 4, la fenêtre angulaire affectée à la branche 16a, dont le filtre 22 a une fréquence centrale f1 de 7 kHz au ralenti, va de 50 à 70°. La fenêtre affectée à la branche 18a, à fréquence f2, va de 30 à 50°. Enfin, la fenêtre affectée à la branche 52, destinée à détecter le pic à fréquence élevée, va de 0 à 30°. Toutes ces valeurs peuvent être modifiées de quelques degrés sans modification notable des performances. Les sorties des trois commutateurs sont appliquées à un sommateur analogique 56. La sortie du sommateur est reliée à un redresseur 58, à une ou deux alternances, qui attaque un intégrateur 60 dont la fenêtre d'intégration correspond au total des fenêtres fixées par les commutateurs 54. Enfin un échantillonneur-bloqueur 44 remplit le même rôle que celui de la figure 1 et alimente l'une des entrées du commutateur 36.

La branche de référence, destinée à donner une indication sur le bruit de fond, a la même constitution que sur la figure 1. Elle commande encore le gain de l'amplificateur 12.

Le dispositif de la figure 3, comme celui de la figure 1, comporte une partie analogique et une partie numérique. Ils peuvent être constitués sous forme d'une carte de circuit imprimé portant un microprocesseur et des mémoires numériques et portant également des composants analogiques discrets. Les filtres 22 peuvent être des filtres actifs du second ordre à condensateurs commutables. Les circuits peuvent être en MOS complémentaires.

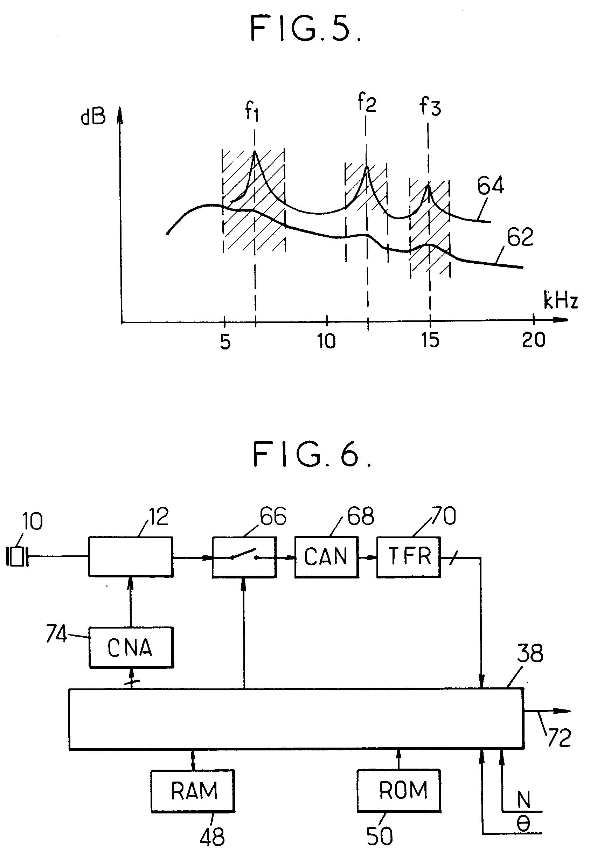

La transformée de Fourier du signal de l'accéléromètre sur une fenêtre temporelle appropriée est montrée schématiquement en figure 5. Le bruit de fond du moteur diminue au-delà de 6 kHz environ, c'est-à-dire présente une enveloppe dont la nature est du genre montré par la courbe 62 sur la figure 5. Ce bruit de fond reste sensiblement le même en présence de cliquetis. Lorsque le cliquetis est assez intense, il présente trois pics qui, dans le cas illustré par la courbe 64 de la figure 5, qui est l'enveloppe de la transformée de Fourier du signal fourni par un accéléromètre en présence de cliquetis, sont d'environ 6,5 kHz, 12 kHz et 15 kHz. Les amplitudes des pics augmentent avec la vitesse du moteur et les pics se déplacent vers des fréquences plus élevées, mais les courbes gardent la même allure.

Le mode de réalisation de la figure 6 utilise ces constatations. La sortie de l'amplificateur 12 est appliquée à un commutateur 66 de sélection de fenêtres, commandé par l'organe de traitement 38. Les signaux de sortie du commutateur 66 sont numérisés par un convertisseur analogique-numérique 68 puis appliqués à un circuit de transformation de Fourier rapide 70, d'un type qui peut être un de ceux actuellement disponibles dans le commerce et qui fournit la TFR du signal pour chaque fenêtre sélectionnée par le commutateur 66.

L'unité de traitement 38 détermine, pour des plages de fréquence centrées sur f1, f2 et f3, modifiées en fonction de la vitesse du moteur suivant une table mémorisée dans une mémoire morte 50, la densité de puissance du signal dû au bruit de fond et au cliquetis éventuel dans ces trois plages.

Par comparaison avec la densité spectrale de puissance dans une zone où les vibrations de cliquetis présentent peu d'énergie, et application d'une stratégie du genre mentionné plus haut, l'unité de traitement fournit, sur une sortie 72, un signal indiquant l'absence ou la présence de cliquetis et éventuellement l'intensité du cliquetis.

Le gain de l'amplificateur 12 est commandé par un signal numérique fourni par l'unité de traitement 38 et transformé en signal analogique dans un convertisseur 74 de façon à maintenir le signal dû au bruit à un niveau sensiblement constant.

## Revendications

1. Procédé de détection du cliquetis d'un moteur à allumage par étincelles, suivant lequel :

on transforme les vibrations détectées (10) en un emplacement du moteur proche des chambres de combustion en un signal électrique, qui est amplifié (12),

on isole (22, 32, 44 ; 66, 70), dans le signal électrique, l'énergie dans au moins une bande de fréquence de cliquetis (16, 18 ; 16a, 18a) et dans au moins une bande de fréquence de bruit de fond (20 ; 20a), plus basse que la plus haute bande de fréquence de cliquetis, au cours d'au moins une fenêtre temporelle (26, 38) synchronisée (38) avec le cycle de fonctionnement du moteur, et

on détecte la présence de cliquetis par comparaison (38) effectuée en utilisant au moins le niveau de puissance (28, 32) dans la bande de bruit de fond (20 ; 20a) et le niveau de puissance (44) dans la ou les bandes de cliquetis (16, 18 ; 16a, 18a),

caractérisé en ce que :

on assure l'amplification du signal électrique avec un coefficient réglable (12),

on commande (28, 32, 34, 74) le coefficient d'amplification (12) du signal pour chacune des bandes de fréquence en fonction de la puissance du signal dans la seule bande de fréquence de bruit de fond (20 ; 20a),

on isole l'énergie du signal électrique dans au moins deux bandes de fréquence de cliquetis, dont une bande de fréquence haute (18 ; 18a) et une bande de fréquence basse (16 ; 16a), et

on détecte la présence de cliquetis par comparaison (38) du niveau de puissance (28, 32) dans la bande de bruit de fond (20 ; 20a) à un niveau de puissance (44) résultant d'une sélection (40) entre les bandes de fréquence de cliquetis (16, 18) ou d'une combinaison (56) entre ces bandes de fréquence de cliquetis (16a, 18a).

2. Procédé selon la revendication 1, caractérisé en ce que les bandes de fréquence de cliquetis (16, 18 ; 16a, 18a) sont centrées (f1, f2) respectivement aux alentours de 6,5 kHz et 11 kHz lors du fonctionnement du moteur à bas régime et sont augmentées (38, 50) au fur et à mesure de l'augmentation du régime (N) du moteur, l'accroissement maximum du moteur étant de l'ordre de 2 kHz.

3. Procédé selon la revendication 2, caractérisé en ce que les bandes de fréquence de cliquetis sont sélectionnées (38) entre plusieurs valeurs prédéterminées (50) et commutées (30) en réponse à la vitesse du moteur (N).

4. Procédé selon l'une quelconque des revendications 1 à 3, caractérisé en ce que la comparaison est effectuée (38) en tenant compte de la différence entre le niveau de puissance dans les bandes de cliquetis au cours d'un cycle et une moyenne pondérée des niveaux au cours de plusieurs cycles précédents.

5. Dispositif de détection de cliquetis destiné à la mise en oeuvre du procédé selon l'une quelconque des revendications 1 à 4 précédentes, comprenant un détecteur de vibrations (10) disposé sur le moteur en un emplacement proche des chambres de combustion, et délivrant un signal électrique à au moins deux voies en parallèle (16, 18, 20 ; 16a, 18a, 20a, 52), comportant des moyens d'amplification (12) et de redressement (24, 58), et affectées, pendant au moins une fenêtre temporelle synchronisée avec le cycle de fonctionnement du moteur, à la détection du bruit de fond pour au moins une voie (20 ; 20a), et à la détection du cliquetis pour au moins une autre voie (16, 18 ; 16a, 18a, 52), chaque voie comprenant un filtre passe-bande (22) ayant une bande passante différente de celle des autres filtres (22), caractérisé en ce que les moyens d'amplification sont un amplificateur (12) à gain réglable, commun à toutes les voies, monté entre le détecteur (10) et les filtres passe-bande (22), et alimentant une unique voie (20 ; 20a) affectée à la détection du bruit de fond, comprenant également des moyens d'intégration (28) et des moyens d'échantillonnage (32) qui lui sont propres, et le signal de bruit de fond intégré étant appliqué à une entrée de commande de gain de l'amplificateur (12) à gain réglable, lequel alimente également au moins deux voies (16, 18 ; 16a, 18a, 52) affectées à la détection du cliquetis, comportant également des moyens d'intégration (28 ; 60) et des moyens d'échantillonnage (44) qui leur sont propres, les sorties des moyens d'échantillonnage (32, 44) étant appliquées à l'entrée de moyens (36) de multiplexage temporel, envoyant en succession leurs signaux de sortie échantillonnés à une unité (38) de traitement numérique de données, qui commande la ou les fenêtres temporelles, de sorte qu'elle(s) corresponde(nt) chacune à une fraction de la phase de détente d'une des chambres de combustion du moteur, et les moyens d'intégration (28, 60), d'échantillonnage (32, 44) et de multiplexage (36), et élabore un signal indicateur de cliquetis en fonction des résultats de comparaisons faites entre les signaux échantillonnés qu'elle reçoit.

6. Dispositif selon la revendication 5, caractérisé en ce que chacune des voies (16, 18) affectée à la détection du cliquetis comporte ses propres moyens de redressement (24) et d'intégration (28), intégrant pendant une fenêtre temporelle correspondante, les moyens d'échantillonnage correspondants (44) étant communs aux différentes voies affectées à la détection du cliquetis et recevant, sur leur entrée, la sortie de moyens de sélection (42) sélectionnant celui des signaux qui est le plus élevé parmi ceux provenant des moyens d'intégration (28) des voies (16, 18) de détection du cliquetis, après comparaison de ces signaux par des moyens de comparaison (40) commandant les moyens de sélection (42).

7. Dispositif selon la revendication 6, caractérisé en ce que l'unité (38) de traitement numérique de données commande une unique fenêtre temporelle d'intégration réglée pour correspondre à une fenêtre angulaire d'environ 70° à partir du point mort haut de ladite chambre de combustion du moteur.

8. Dispositif selon la revendication 5, caractérisé en ce que les voies (16a, 18a, 52), affectées à la détection du cliquetis comportent chacune un commutateur (54) de sélection de fenêtre temporelle, et sont reliées à l'entrée de moyens de sommation (56) de signal, communs à ces voies, et dont la sortie est reliée à l'entrée des moyens de redressement (58) d'intégration (60) et d'échantillonnage (44) également communs à ces voies, la durée d'intégration desdits moyens d'intégration (60) recouvrant les fenêtres temporelles commandées par l'unité (38) pour la fermeture des commutateurs (54).

9. Dispositif selon la revendication 8, caractérisé en ce qu'il comprend une troisième voie (52) affectée à la détection du cliquetis, et en ce que la fréquence centrale à bas régime (f1, f2, f3) et les fenêtres temporelles, pour les trois voies de détection du cliquetis (16a, 18a, 52) sont respectivement environ 7 kHz et 50 à 70° à partir du point mort haut pour la première voie (16a), 11 kHz et 30 à 50° à partir du point mort haut pour la deuxième voie (18a), et 16 kHz et 0 à 30° à partir du point mort haut pour la troisième voie (52).

10. Dispositif de détection de cliquetis, destiné à la mise en oeuvre du procédé selon l'une quelconque des revendications 1 à 4 précédentes, comprenant un détecteur de vibrations (10), disposé en un emplacement du moteur proche des chambres de combustion, et délivrant un signal électrique, caractérisé en ce que ledit signal est transmis à un amplificateur (12) à gain réglable, alimentant des moyens commutateurs de sélection de fenêtres temporelles (66), dont la sortie est reliée à un convertisseur analogique-numérique (68), lui-même relié par sa sortie à un organe (70) de transformation du signal électrique à variation temporelle en des données de définition du signal dans le domaine fréquentiel, pour la tranche de signal comprise dans chaque fenêtre temporelle, et une unité (38) de traitement numérique de données à laquelle ledit organe (70) transmet lesdites données de définition du signal dans le domaine fréquentiel, et permettant de déterminer la densité spectrale de puissance dans la bande de fréquence de bruit de fond et dans les au moins deux bandes de fréquence de détection du cliquetis, d'effectuer une comparaison entre lesdites densités pour délivrer un signal de présence ou d'absence de cliquetis, de commander le gain de l'amplificateur (12) en fonction de la densité de puissance dans la bande de bruit de fond, et de commander les moyens commutateurs (66) de sélection de fenêtres temporelles, de sorte que chaque fenêtre temporelle soit synchronisée avec le cycle de fonctionnement du moteur.

11. Dispositif selon la revendication 10, caractérisé en ce que ledit organe (70) de transformation de chaque tranche de signal électrique numérisé en données de définition du signal dans le domaine fréquentiel comprend un circuit de transformation de Fourier rapide, délivrant la transformée de Fourier rapide du signal pour chaque fenêtre sélectionnée par les moyens commutateurs (66) à l'unité de traitement (38).

12. Dispositif selon l'une quelconque des revendications 10 et 11, caractérisé en ce que l'unité de traitement (38), d'une part, commande le gain de l'amplificateur (12) par un signal numérique transformé en signal analogique dans un convertisseur numérique-analogique (74), de façon à maintenir le signal dû au bruit à un niveau sensiblement constant, et, d'autre part, modifie les fréquences centrales (f1, f2, f3) de la bande de fréquence de bruit de fond et des au moins deux bandes de fréquence de détection du cliquetis en fonction de la vitesse (N) du moteur, suivant une table mémorisée dans une mémoire morte (50).

**Patentansprüche**

1. Verfahren zum Ermitteln des Klopfens eines Motors mit Funkenzündung, bei dem man
   - an einem Ort des Motors in der Nähe der Brennkammern die ermittelten Schwingungen (10) in ein elektrisches Signal umwandelt, das verstärkt wird (12),
   - während wenigstens eines mit dem Arbeitstakt des Motors synchronisierten (38) Zeitfensters (26, 38) im elektrischen Signal (22, 32, 44; 66, 70) die Energie in wenigstens einem Klopffrequenzband (16, 18; 16a, 18a) und in wenigstens einem Grundgeräuschfrequenzband (20; 20a) isoliert, das leiser als das lauteste Klopffrequenzband ist,
   - das Vorliegen des Klopfens durch Vergleichen (38) ermittelt unter Verwendung wenigstens des Leistungsniveaus (28, 32) im Grundgeräuschfrequenzband (20, 20a) und des Leistungsniveaus (44) in dem oder den Klopffrequenzbändern (16, 18; 16a, 18a),
   dadurch **gekennzeichnet,**
   daß man
   - die Verstärkung des elektrischen Signals mit einem regelbaren Koeffizient ausführt (12),
   - den Verstärkungskoeffizient (12) des Signals für jedes der Frequenzbänder in Abhängigkeit von der Leistung des Signals in dem einzigen Grundgeräuschfrequenzband (20; 20a) steuert,
   - die Energie des elektrischen Signals in wenigstens zwei Klopffrequenzbänder isoliert, nämlich ein Hochfrequenzband (18; 18a) und ein Niederfrequenzband (16; 16a), und
   - das Vorliegen des Klopfens durch Vergleichen (38) des Leistungsniveaus (28, 32) im Grundgeräuschband (20; 20a) mit einem Leistungsniveau (44) ermittelt, das sich aus einer Wahl (40) zwischen den Klopffrequenzbändern (16, 18) oder einer Kombination (56) zwischen diesen Klopffrequenzbändern (16a, 18) ergibt.

2. Verfahren nach Anspruch 1,
   dadurch gekennzeichnet,
   daß die Klopffrequenzbänder (16, 18; 16a, 18a) bei niedriger Motordrehzahl (N) auf die Umgebungen von 6,5 kHz bzw. 11 kHz zentriert und entsprechend einer Erhöhung der Motordrehzahl (N) vergrößert werden (38, 50), wobei die maximale Zunahme des Motors in der Größenordnung von 2 kHz liegt.

3. Verfahren nach Anspruch 2,
dadurch gekennzeichnet,
daß die Klopffrequenzbänder zwischen mehreren gegebenen Werten (50) gewählt und in Abhängigkeit von der Motordrehzahl (N) umgeschaltet werden.

4. Verfahren nach einem der Ansprüche 1 bis 3,
dadurch gekennzeichnet,
daß das Vergleichen (38) erfolgt unter Beachtung der Differenz zwischen dem Leistungsniveau in den Klopffrequenzbändern während eines Takts und einem gewogenen Mittel des Niveaus während mehrerer vorhergehender Takte.

5. Vorrichtung zum Ermitteln des Klopfens zur Durchführung des Verfahrens nach einem der vorhergehenden Ansprüche 1 bis 4 mit einem Schwingungsdetektor (10), der am Motor an einem in der Nähe der Brennkammern gelegenen Ort angeordnet ist und ein elektrisches Signal auf wenigstens zwei parallelen Wegen (16, 18, 20; 16a, 18a, 20a) liefert, die Verstärkungsmittel (12) und Gleichrichtmittel (24, 56) umfassen und während wenigstens eines mit dem Arbeitstakt des Motors synchronisierten Zeitfensters der Ermittlung des Grundgeräuschs für wenigstens einen Weg (20; 20a) und der Ermittlung des Klopfens für wenigstens einen weiteren Weg (16, 18; 16a, 18a, 52) zugeordnet sind, wobei jeder Weg einen Bandfilter (23) aufweist, dessen Durchlaßbereich von demjenigen der anderen Filter (22) abweicht,
dadurch **gekennzeichnet,**
daß die Verstärkungsmittel aus einem Verstärker (12) mit regelbarer Leistung bestehen, der allen Wegen gemeinsam ist, zwichen dem Detektor (10) und den Bandfiltern (22) angeordnet ist und einen einzigen, der Ermittlung des Grundgeräuschs zugeordneten Bandfilter (22) speist, enthaltend auch eigene Integrationsmittel (28) und Eichmittel (32), wobei das integrierte Grundgeräuschsignal auf einen Leistungssteuereingang des Verstärkers (12) mit regelbarer Leistung gegeben wird, der auch wenigstens zwei Wege (16, 18; 16a, 18a) speist, die der Ermittlung des Klopfens zugeordnet sind, enthaltend auch eigene Integrationsmittel (28; 60) und Eichmittel (44), wobei die Ausgänge der Eichmittel (32, 44) auf den Eingang von Zeitmultiplexmitteln (36) gegeben werden, die aufeinanderfolgend ihre geeichten Ausgangssignale zu einer digitalen Datenverbeitungseinheit (38) schicken, die das oder die Zeitfenster so steuert, daß es oder sie jeweils einem Bruchteil der Entspannungsphase einer der Brennkammern des Motors entsprechen, die Integrationsmittel (28, 60), die Eichmittel (32, 44) sowie die Multiplexmittel (36) steuert, und ein Signal bildet, das das Klopfen in Abhängigkeit von den Ergebnissen von Vergleichen anzeigt, die zwischen den von ihr empfangenen geeichten Signalen vorgenommen werden.

6. Vorrichtung nach Anspruch 6,
dadurch gekennzeichnet,
daß jeder der Wege (16, 18) für die Ermittlung des Klopfens seine eigenen Gleichrichtmittel (24) und Integrationsmittel (28) aufweist, die während eines entsprechenden Zeitfensters integrieren, wobei die entsprechenden Eichmittel (44) den verschiedenen Wegen für die Ermittlung des Klopfens gemeinsam sind und an ihrem Eingang den Ausgang von Wählmitteln (42) empfangen, die von Signalen dasjenige wählen, das unter denen am stärksten ist, die von den Integrationsmitteln (28) der Wege (16, 18) für das Ermitteln des Klopfens kommen, nämlich nach einem Vergleich dieser Signale durch die Wählmittel (42) steuernde Vergleichmittel (40).

7. Vorrichtung nach Anspruch 6,
dadurch gekennzeichnet,
daß die digitale Datenverarbeitungseinheit (38) ein einziges Integrationszeitfenster steuert, das so geregelt wird, daß es einem Winkelfenster von ungefähr 70° entspricht, ausgehend vom oberen Totpunkt der Brennkammer des Motors.

8. Vorrichtung nach Anspruch 5,
dadurch gekennzeichnet,
daß die Wege (16a, 18a, 52) für die Ermittlung des Klopfens jeweils einen Schalter (54) für die Wahl des Zeitfensters aufweisen und mit dem Eingang von Signalsummiermitteln (56) verbunden sind, die diesen Wegen gemeinsam sind und deren Ausgang mit dem Eingang von ebenfalls diesen Wegen gemeinsamen Gleichrichtmitteln (58), Integrationsmitteln (60) und Eichmitteln (44) verbunden sind, wobei die Integrationsdauer dieser Integrationsmittel (60) die Zeitfenster überdecken, die durch die Einheit (38) für das Schließen der Schalter (54) gesteuert werden.

9. Vorrichtung nach Anspruch 8,
dadurch gekennzeichnet,
daß sie einen dritten Weg (52) für die Entwicklung des Klopfens aufweist und
daß die zentrale Frequenz (f1, f2, f3) bei niedriger Drehzahl die Zeitfenster für die drei Wege zur Ermittlung des Klopfens (16a, 18a, 52) jeweils betragen: ungefähr 7 kHz und 50 bis 70° ausgehend vom oberen Totpunkt für den ersten Weg (16a), 11 kHz und 30 bis 50° ausgehend vom oberen Totpunkt für den zweiten Weg (18a) und 16 kHz und O bis 30° ausgehend vom oberen Totpunkt für den dritten Weg (52).

10. Vorrichtung zum Ermitteln des Klopfens zur Durchführung des Verfahrens nach einem der vorhergehenden Ansprüche 1 bis 4, mit einem Schwingungsdetektor (10), der an einem den Brennkammern nahe gelegenen Ort des Motors angeordnet ist und ein elektrisches Signal liefert, dadurch gekennzeichnet, daß das Signal zu einem Verstärker (12) mit regelbarer Leistung übertragen wird, der Schaltmittel für die Wahl von Zeitfenstern (66) speist, deren Ausgänge mit einem Analog-Digitalumsetzer (68) verbunden ist, der seinerseits mit seinem Ausgang verbunden ist mit einem Organ (70) zur Umformung des elektrischen Signals mit zeitlicher Änderung in Daten zur Definition des Signals im Frequenzbereich für den Signalabschnitt in jedem Zeitfenster, und daß eine Einheit (38) zur rechnerischen Verarbeitung von Daten, auf die das Organ (70) die Daten zur Definition des Signals im Frequenzbereich überträgt, folgendes ermöglicht: eine Bestimmung der spektralen Leistungsdichte im Grundgeräuschfrequenzband und in wenigstens zwei Frequenzbändern zur Ermittlung des Klopfens, eine Ausführung eines Vergleichs zwischen den angegebenen Dichten zur Lieferung eines Signals für das Vorhandensein oder Fehlens des Klopfens, eine Steuerung der Leistung des Verstärkers (12) in Abhängigkeit von der Leistungsdichte im Grundgeräuschband und eine Steuerung der Schaltmittel (66) für die Wahl von Zeitfenstern derart, daß jedes Zeitfenster mit dem Arbeitstakt des Motors synchronisiert ist.

11. Vorrichtung nach Anspruch 10, dadurch gekennzeichnet, daß das Organ (70) zur Umformung jedes elektrischen digitalisierten Signalabschnitts in Daten zur Definition des Signals im Frequenzbereich eine Schaltung für eine schnelle Fourier-Transformation aufweist, die die schnelle Fourier-Transforamtion des Signals für jedes durch die Schaltmittel (66) gewählte Fenster zur Verarbeitungseinheit (38) liefert.

12. Vorrichtung nach einem der Ansprüche 10 und 11, dadurch gekennzeichnet, daß die Verarbeitungseinheit (38) einerseits die Leistung des Verstärkers (12) durch ein digitales Signal steuert, das in einem Digital-Analogumsetzer (74) in ein analoges Signal umgewandelt wird, so daß das durch das Geräusch bedingte Signal auf einem im wesentlichen konstanten Niveau gehalten wird, und andererseits die zentralen Frequenzen (fl, f2, f3) des Grundgeräuschfrequenzbands und von wenigstens zwei Frequenzbändern zur Ermittlung des Klopfens in Abhängigkeit von der Drehzahl (N) des Motors gemäß einer in einem Festspeicher (50) gespeicherten Tabelle abändert.

## Claims

1. A method of detecting the pinking of a spark ignition engine, wherein:
   the vibrations detected (10) at an engine location near the combustion chambers is converted into an electrical signal, which is amplified (12),
   the energy in at least one pinking frequency band (16, 18; 16a, 18a) and in at least one background noise frequency band (20; 20a) lower than the highest pinking frequency band is isolated (22, 32, 44; 66, 70) in the electrical signal, during at least one time window (26, 38) synchronised (38) with the engine operating cycle, and
   the presence of pinking is detected by comparison (38) carried out using at least the power level (28, 32) in the background noise band (20; 20a) and the power level (44) in the or each pinking band (16, 18; 16a, 18a),
   characterised in that
   the electrical signal is amplified with an adjustable coefficient (12),
   the amplification coefficient (12) of the signal for each of the frequency bands is controlled (28, 32, 34, 74) in dependence on the power of the signal in the background noise frequency band alone (20; 20a),
   the energy of the electrical signal in at least two pinking frequency bands comprising a high frequency band (18; 18a) and a low frequency band (16; 16a) is isolated, and
   the presence of pinking is detected by comparison (38) of the power level (28, 32) in the background noise band (20; 20a) at a power level (44) resulting from a selection (40) from the pinking frequency bands (16, 18) or a combination (56) between said pinking frequency bands (16a, 18a).

2. A method according to claim 1, characterised in that the pinking frequency bands (16, 18; 16a, 18a) are centred (f1, f2) respectively around 6.5 kHz and 11 kHz during operation of the engine at low speed and are increased (38, 50) as the engine speed (N) increases, the maximum engine increase being of the order of 2 kHz.

3. A method according to claim 2, characterised in that the pinking frequency bands are selected (38) from a number of predetermined values (50) and are changed over (30) in response to the engine speed (N).

4. A method according to any one of claims 1 to 3, characterised in that the comparison is effected (38) allowing for the difference between the power level in the pinking bands during a cycle and a weighted average of the levels during a number of preceding cycles.

5. A pinking detection device intended for performing the method according to any one of claims 1 to 4, comprising a vibration detector (10) disposed on the engine at a location near the combustion chambers and delivering an electrical signal to at least two parallel channels (16, 18, 20; 16a, 18a, 20a, 52), comprising amplification means (12) and rectifying means (24, 58), and associated, during at least one time window synchronised with the engine operating cycle, with detection of the background noise for at least one channel (20; 20a) and detection of the pinking for at least one other channel (16, 18; 16a, 18a, 52), each channel comprising a band-pass filter (22) having a pass band differing from that of the other filters (22), characterised in that the amplification means are an adjustable gain amplifier (12) common to all the channels and disposed between the detector (10) and the band-pass filters (22) and feeding a single channel (20; 20a) associated with detection of the background noise, also comprising integration means (28) and sampling means (32) specific thereto, the integrated background noise signal being applied to a gain control input of the adjustable gain amplifier (12), which also feeds at least two channels (16, 18; 16a, 18a, 52) associated with the pinking detection, also comprising integration means (28; 60) and sampling means (44) specific thereto, the outputs of the sampling means (32, 44) being applied to the input of time multiplexing means (36) successively applying their sampled output signals to a digital data processing unit (38) which controls the or each time window so that they each correspond to a fraction of the expansion phase of one of the engine combustion chambers, and the integration means (28, 60), sampling means (32, 44) and multiplexing means (36) and processes a signal indicative of pinking in dependence on the results of comparisons made between the sampled signals it receives.

6. A device according to claim 5, characterised in that each of the channels (16, 18) associated with pinking detection comprises its own specific rectifying means (24) and integrating means (28), which effect integration during a corresponding time window, the corresponding sampling means (44) being common to the different channels associated with pinking detection and receiving, on their input, the output of selection means (42) which select whichever of the signals is highest from those originating from the integration means (28) of the pinking detection channels (16, 18), after comparison of these signals by comparison means (40) controlling the selection means 42).

7. A device according to claim 6, characterised in that the digital data processing unit (38) controls a single integration time window adjusted to correspond to an angular window of about 70° from the top dead centre of the said engine combustion chamber.

8. A device according to claim 5, characterised in that the channels (16a, 18a, 52) associated with pinking detection each comprise a time window selector switch (54) and are connected to the input of signal summation means (56), common to said channels, and the output of which is connected to the input of the rectifying means (58), integration means (60) and sampling means (44) also common to these channels, the integration time of said integration means (60) overlapping the time windows controlled by the unit (38) for closing the selector switches (54).

9. A device according to claim 8, characterised in that it comprises a third channel (52) associated with pinking detection and in that the central frequency at low speed (f1, f2, f3) and the time windows for the three pinking detection channels (16a, 18a, 52) are respectively about 7 kHz and 50° to 70° from the top dead centre for the first channel (16a), 11 kHz and 30 to 50° from the top dead centre for the second channel (18a), and 16 kHz and 0 to 30° from the top dead centre for the third channel (52).

10. A pinking detection device intended for performing the method according to any one of claims 1 to 4, comprising a vibration detector (10) disposed at an engine location near the combustion chambers and delivering an electrical signal, characterised in that the said signal is transmitted to an adjustable gain amplifier (12) feeding time window selector means (66), the output of which is connected to an analog-digital converter (68) which is in turn connected by its output to a means (70) for converting the time-variation electrical signal into signal definition data in the frequency range, for the signal section contained in each time window, and a digital data processing unit (38) to which said means (70) transmits the said signal definition data in the frequency range, and enabling the spectral power density to be determined in the background noise frequency band and in the at least two pinking detection frequency bands, comparison to be effected between the said densities to deliver a signal showing the presence or absence of pinking, the gain of the amplifier (12) to be controlled in dependence on the power density in the background noise band, and the time window selector means (66) to be controlled so that each time window is synchronised with the engine operating cycle.

11. A device according to claim 10, characterised in that the said means (70) for converting each digitized electrical signal section into signal definition data in the frequency range comprises a fast Fourier transformation circuit delivering the fast Fourier transform of the signal for each window selected by the selector means (66) to the processing unit (38).

12. A device according to claim 10 or 11, characterised in that the processing unit (38), on the one hand, controls the gain of the amplifier (12) by means of a digital signal converted to an analog signal in a digital-analog converter (74) so as to keep the noise signal at a substantially constant level and, on the other hand, modifies the central frequencies (f1, f2, f3) of the background noise frequency band and of the at least two pinking detection frequency bands in dependence on the engine speed (N) in accordance with a table stored in a read-only memory (50).

# FIG.1.

# FIG.2.

FIG. 3.

FIG. 4.

EP 0 423 031 B1

# FIG.5.

# FIG.6.